# EUROPEAN PATENT APPLICATION

(11) **EP 4 534 966 A1**
(43) Date of publication of application: **09.04.2025**
(21) Application number: 23815907.3
(22) Date of filing: 24.05.2023
(51) Int. Cl.: G01L 1/00, G01J 1/50, G01J 3/46, G01J 3/52, G01K 17/00, G01L 5/00

(54) **CALIBRATION MEMBER, ENERGY MEASURING DEVICE, ENERGY MEASURING METHOD, AND ENERGY MEASURING PROGRAM**

(30) Priority: 03.06.2022 JP 2022091062
(71) Applicant: FUJIFILM Corporation, Tokyo 106-8620 (JP)
(72) Inventor: OMOTO, Makoto, Tokyo 106-8620 (JP)
(74) Representative: Meissner Bolte Partnerschaft mbB
(86) International application number: PCT/JP2023/019397
(87) International publication number: WO 2023/234148

(57) **Abstract**

Provided is a calibration member for calibration of an image of a color forming member, which forms a color with density distribution corresponding to an amount of energy applied thereto, in a captured image obtained by imaging the color forming member by an imaging device, the calibration member including a support that includes a first region on which the color forming member is placed and a second region on which a calibration image for calibration of the image of the color forming member is disposed and a transparent member that covers the color forming member placed on the first region of the support and of which a surface that serves as an imaging target surface in a case where the color forming member is to be imaged has a low gloss.

## Description

### Technical Field

The present disclosure relates to a calibration member, an energy measurement apparatus, an energy measuring method, and an energy measurement program.

### Background Art

In the related art, a technique of measuring the amount of energy by using a color forming member that forms a color in accordance with energy such as pressure, heat, and ultraviolet rays applied thereto is known. Examples of such a color forming member include PRESCALE (registered trademark) (manufactured by FUJIFILM Corporation) with which a color formation density corresponding to applied pressure can be obtained.

For example, described in WO2021/235364A is a technique of converting a density value of a pressure measurement sheet into a pressure value based on an image showing a color forming member that is included in a captured image obtained by disposing the pressure measurement sheet (for example, PRESCALE) on a calibration sheet and imaging the pressure measurement sheet.

### SUMMARY OF THE INVENTION

### Technical Problem

It can be said that the technique described in WO2021/235364A is not sufficient to make the tint of an image of a color forming member appropriate in some cases, the image of the color forming member being included in a captured image obtained by imaging the color forming member.

The present disclosure provides a calibration member, an energy measurement apparatus, an energy measuring method, and an energy measurement program with which it is possible to make the tint of an image of a color forming member appropriate, the image of the color forming member being included in a captured image obtained by imaging the color forming member.

### Solution to Problem

According to a first aspect of the present disclosure, there is provided a calibration member for calibration of an image of a color forming member, which forms a color with density distribution corresponding to an amount of energy applied thereto, in a captured image obtained by imaging the color forming member by an imaging device, the calibration member including a support that includes a first region on which the color forming member is placed and a second region on which a calibration image for calibration of the image of the color forming member is disposed and a transparent member that covers the color forming member placed on the first region of the support and of which a surface that serves as an imaging target surface in a case where the color forming member is to be imaged has a low gloss.

According to a second aspect of the present disclosure, in the calibration member according to the first aspect, a gloss of the surface of the transparent member that serves as the imaging target surface may be 40 or less in terms of 60-degree gloss.

According to a third aspect of the present disclosure, in the calibration member according to the first aspect, a gloss of the surface of the transparent member that serves as the imaging target surface may be lower than a gloss of a surface of the support on which the color forming member is placed.

According to a fourth aspect of the present disclosure, in the calibration member according to the first aspect, the support may be a laminate in which a first support layer including the second region and a second support layer including the first region are laminated on each other, and a gloss of a surface of the second support layer on which the color forming member is placed may be higher than a gloss of a surface of the first support layer that is in contact with the second support layer.

According to a fifth aspect of the present disclosure, in the calibration member according to the first aspect, the support may be composed of synthetic paper.

According to a sixth aspect of the present disclosure, in the calibration member according to the first aspect, the support may be a resin layer on which the calibration image is disposed.

According to a seventh aspect of the present disclosure, in the calibration member according to the first aspect, the calibration image may be disposed on a surface of the support that is on a side opposite to a side on which the color forming member is placed.

According to an eighth aspect of the present disclosure, in the calibration member according to the first aspect, the color forming member forms a red color and blue grid lines may be formed on the first region of the support.

According to a ninth aspect of the present disclosure, there is provided an energy measurement apparatus including at least one processor, the processor is configured to acquire a color forming member image showing a color forming member imaged by an imaging device, perform calibration with respect to the color forming member image by using the calibration image disposed on the calibration member of the present disclosure, and derive an amount of energy applied to the color forming member based on a color of the color forming member image after the calibration by using data in which a relationship between the amount of energy applied to the color forming member and the color of the color forming member image is determined in advance.

According to a tenth aspect of the present disclosure, there is provided an energy measuring method of causing a computer to execute processing of acquiring a color forming member image showing a color forming member imaged by an imaging device, performing calibration with respect to the color forming member image by using the calibration image disposed on the calibration member of the present disclosure, and deriving an amount of energy applied to the color forming member based on a color of the color forming member image after the calibration by using data in which a relationship between the amount of energy applied to the color forming member and the color of the color forming member image is determined in advance.

According to an eleventh aspect of the present disclosure, there is provided an energy measurement program causing a computer to execute processing of acquiring a color forming member image showing a color forming member imaged by an imaging device, performing calibration with respect to the color forming member image by using the calibration image disposed on the calibration member of the present disclosure, and deriving an amount of energy applied to the color forming member based on a color of the color forming member image after the calibration by using data in which a relationship between the amount of energy applied to the color forming member and the color of the color forming member image is determined in advance.

### Advantageous Effects of Invention

With the calibration member, the energy measurement apparatus, the energy measuring method, and the energy measurement program according to the aspects of the present disclosure, it is possible to make the tint of an image of a color forming member appropriate, the image of the color forming member being included in a captured image obtained by imaging the color forming member.

### BRIEF DESCRIPTION OF DRAWINGS

Fig. 1 is a configuration diagram schematically showing an example of an overall configuration of an energy measurement system according to an exemplary embodiment.
Fig. 2 is a view showing an example of a calibration member.
Fig. 3 is a cross-sectional view showing a cross section of an example of a portion of the calibration member on which a color forming member is placed.
Fig. 4 is a block diagram showing an example of a hardware configuration of a smartphone.
Fig. 5 is a block diagram showing an example of a functional configuration of the smartphone.
Fig. 6 is a diagram for description of an example of a screen displayed on a display.
Fig. 7 is a flowchart showing an example of measurement processing.
Fig. 8 is a cross-sectional view showing a cross section of another example of a portion of the calibration member on which the color forming member is placed.
Fig. 9 is a cross-sectional view showing a cross section of another example of a portion of the calibration member on which the color forming member is placed.
Fig. 10 is a diagram showing another example of the calibration member.

### DESCRIPTION OF EMBODIMENTS

Hereinafter, an exemplary embodiment of the present disclosure will be described in detail with reference to the drawings. It should be noted that the present exemplary embodiment does not limit the technology of the present disclosure.

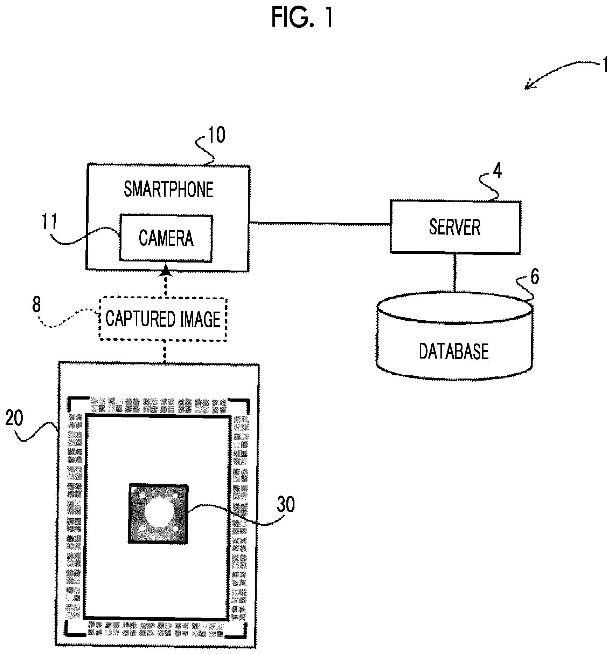

First, an example of an overall configuration of an energy measurement system according to the present exemplary embodiment will be described. Fig. 1 is a configuration diagram showing an example of an overall configuration of an energy measurement system 1 according to the present exemplary embodiment. As shown in Fig. 1, the energy measurement system 1 according to the present exemplary embodiment includes a server 4, a database 6, and a smartphone 10. The server 4 and the smartphone 10 are connected to each other via a wired or wireless network such that the server 4 and the smartphone 10 can communicate with each other.

The energy measurement system 1 of the present exemplary embodiment is a system for measuring the amount of energy by using a color forming member 30 that forms a color with density distribution corresponding to the amount of energy applied thereto in a case where energy such as pressure, heat, and ultraviolet rays is applied thereto. Specifically, the color forming member 30 after application of energy is imaged by a camera 11 of the smartphone 10 and the amount of energy applied to the color forming member 30 is derived from a captured image 8 obtained by imaging the color forming member 30. The camera 11 of the smartphone 10 according to the present exemplary embodiment is an example of an imaging device according to the embodiment of the present disclosure. In addition, the smartphone 10 is an example of an energy measurement apparatus according to the embodiment of the present disclosure.

As the color forming member 30, PRESCALE (registered trademark) (manufactured by FUJIFILM Corporation), which forms a color with density distribution corresponding to the amount of pressure applied thereto, can be applied. The PRESCALE is obtained by applying a color former including microcapsules in which colorless dye is included and a color developer to a sheet-shaped support. In a case where pressure is applied to the PRESCALE, the microcapsules are broken, the colorless dye is adsorbed to the color developer, and a color is formed. In addition, since the color former includes a plurality of kinds of microcapsules having different sizes and strengths, the number of microcapsules that are broken depends on pressure applied to the PRESCALE and color optical density also depends on pressure applied to the PRESCALE. Therefore, by observing the color optical density, the magnitude of the pressure applied to the PRESCALE, pressure distribution, and the like can be measured.

In addition, for example, as the color forming member 30, THERMOSCALE (a product name) (manufactured by FUJIFILM Corporation) which forms a color with density distribution corresponding to the amount of heat applied thereto, UVSCALE (a product name) (manufactured by FUJIFILM Corporation) which forms a color with density distribution corresponding to the amount of ultraviolet rays applied thereto, or the like may also be applied.

The server 4 in the present exemplary embodiment is a general-purpose computer in which a software program that provides a function of a database management system (DBMS) has been installed. The server 4 acquires, from the smartphone 10, the captured image 8 and the amount of energy derived from the captured image 8, and the captured image 8 and the amount of energy are stored in the database 6. Note that the way in which the server 4 and the database 6 are connected to each other is not particularly limited and for example, the server 4 and the database 6 may be connected to each other via a data bus or may be connected to each other via a network such as a network attached storage (NAS) and a storage area network (SAN).

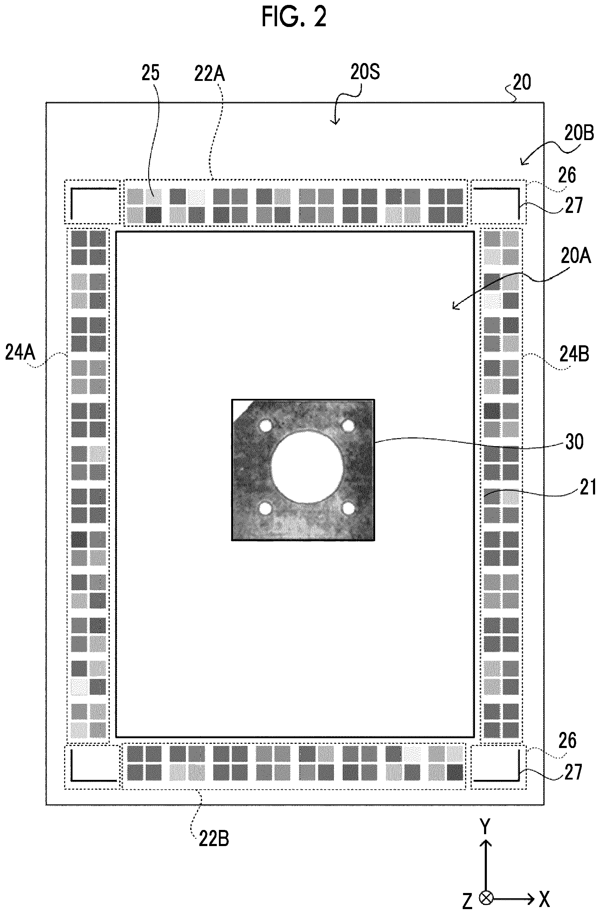

In the present exemplary embodiment, in a case where the color forming member 30 is to be imaged by the camera 11 of the smartphone 10, a user uses the camera 11 of the smartphone 10 to image the color forming member 30 in a state where the color forming member 30 is placed on a calibration member 20 as shown in Fig. 1 and Fig. 2 which will be described in detail later. Accordingly, the smartphone 10 acquires the captured image 8 including the calibration member 20 and the color forming member 30. In a case where the user performs imaging in such a manner, the captured image 8 may be influenced by an imaging environment such as an illumination environment in which the imaging is performed, the characteristics of the camera 11, an imaging angle, and an imaging distance. The calibration member 20 is for correction of the influences thereof on the captured image 8.

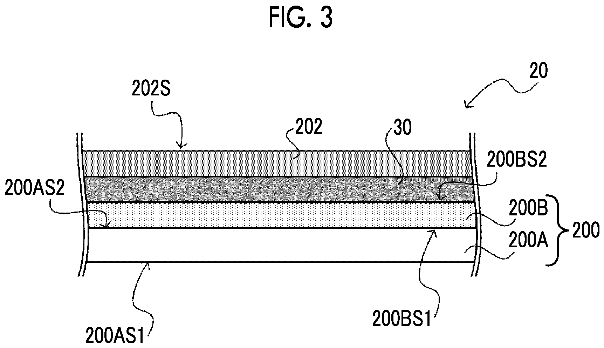

The calibration member 20 of the present exemplary embodiment will be described in detail with reference to Figs. 2 and 3. Note that Fig. 2 shows a state where the color forming member 30 is placed on the calibration member 20, and shows a surface (hereinafter, referred to as an "imaging target surface 20S") of the calibration member 20 that is imaged with the color forming member 30 placed thereon.

As shown in Fig. 2, the imaging target surface 20S includes a first region 20A in which the color forming member 30 is placed and a second region 20B on which a plurality of patches 25 are disposed. For example, the first region 20A of the present exemplary embodiment is a central region of the imaging target surface 20S and is surrounded by a frame 21. In addition, the second region 20B is a region around the first region 20A on the imaging target surface 20S. In other words, the second region 20B is a region outside the frame 21 on the imaging target surface 20S. Note that the patches 25 of the present exemplary embodiment are examples of a calibration image according to the embodiment of the present disclosure.

The smartphone 10 of the energy measurement system 1 of the present exemplary embodiment, performs correction of the distortion, the inclination, and the size of the captured image 8 by using the frame 21 on the imaging target surface 20S of the calibration member 20 (details will be described later). In particular, in a case where the frame 21 (that is, the first region 20A) is rectangular, the accuracy of the correction of the distortion, the inclination, and the size of the captured image 8 can be improved. Therefore, it is preferable that the frame 21 is rectangular.

In addition, the imaging target surface 20S includes the plurality of patches 25 that extend along each side of the rectangular frame 21. As shown in Fig. 2, for example, a pair of first patch groups 22A and 22B is disposed on the second region 20B of the present exemplary embodiment such that the first patch groups 22A and 22B face each other with the first region 20A interposed therebetween. At least one of the first patch group 22A or the first patch group 22B includes the plurality of patches 25 having different colors. For example, at least one of the first patch group 22A or the first patch group 22B may include the plurality of patches 25 having the same hue and different color densities. In other words, the colors of the plurality of patches 25 included in at least one of the first patch group 22A or the first patch group 22B may be different from each other.

The colors and the number of the patches 25 included in the first patch group 22A may be the same as or different from the colors and the number of the patches 25 included in the first patch group 22B. For example, in the case of the calibration member 20 according to the present exemplary embodiment, as shown in Fig. 2, the colors and the number of the patches 25 included in the first patch group 22A are the same as the colors and the number of the patches 25 included in the first patch group 22B. However, the arrangement of the patches 25 of respective colors is different between the patch groups. In addition, as shown in Fig. 2, in the case of the calibration member 20 according to the present exemplary embodiment, the plurality of patches 25 of the first patch groups 22A and 22B are arranged in an X direction and a Y direction. Note that it is preferable that the number (16 in the example of Fig. 2) of patches 25 arranged in the X direction is larger than the number (two in the example of Fig. 2) of patches 25 arranged in the Y direction.

In addition, as shown in Fig. 2, for example, a pair of second patch groups 24A and 24B is disposed on the second region 20B of the present exemplary embodiment such that the second patch groups 24A and 24B face each other with the first region 20A interposed therebetween. At least one of the second patch group 24A or the second patch group 24B includes the plurality of patches 25 having different colors. For example, at least one of the second patch group 24A or the second patch group 24B may include the plurality of patches 25 having the same hue and different color densities. In other words, the colors of the plurality of patches 25 included in at least one of the second patch group 24A or the second patch group 24B may be different from each other.

The colors and the number of the patches 25 included in the second patch group 24A may be the same as or different from the colors and the number of the patches 25 included in the second patch group 24B. For example, in the case of the calibration member 20 according to the present exemplary embodiment, as shown in Fig. 2, the colors and the number of the patches 25 included in the second patch group 24A are the same as the colors and the number of the patches 25 included in the second patch group 24B. However, the arrangement of the patches 25 of respective colors is different between the patch groups. In addition, in the case of the calibration member 20 according to the present exemplary embodiment which is shown in Fig. 2, the plurality of patches 25 of the second patch groups 24A and 24B are arranged in the X direction and the Y direction. Note that it is preferable that the number (24 in the example of Fig. 2) of patches 25 arranged in the Y direction is larger than the number (two in the example of Fig. 2) of patches 25 arranged in the X direction.

The number of the patches 25 included in each of the first patch groups 22A and 22B may be the same as or different from the number of the patches 25 included in each of the second patch groups 24A and 24B. In Fig. 2, the number of patches 25 included in each of the first patch groups 22A and 22B is 32 and the number of patches 25 included in each of the second patch groups 24A and 24B is 48.

The color of at least one patch 25 included in at least one of the first patch group 22A or the first patch group 22B may be the same as the color of at least one patch 25 included in at least one of the second patch group 24A or the second patch group 24B. In other words, the patch 25 having the same color as the patch 25 included in at least one of the first patch group 22A or the first patch group 22B may be included in at least one of the second patch group 24A or the second patch group 24B. In a case where the patches 25 having the same color as each other are included in at least one of the first patch group 22A or the first patch group 22B and in at least one of the second patch group 24A or the second patch group 24B, the accuracy of calibration of the captured image 8 that is performed by means of the smartphone 10 can be improved (details will be described later).

The plurality of patches 25 included in each of the first patch groups 22A and 22B and the second patch groups 24A and 24B may be the same as each other in at least one of size, shape, or angle. Note that in the present exemplary embodiment, as shown in Fig. 2, the plurality of patches 25 included in each of the first patch groups 22A and 22B and the second patch groups 24A and 24B have rectangular shapes that are the same as each other in size and angle.

In addition, it is preferable that the imaging target surface 20S includes a blank region disposed between a first patch group and a second patch group included in at least one of combinations of a first patch group and a second patch group that are adjacent to each other in a circumferential direction of the first region 20A. Specifically, the expression "combinations of a first patch group and a second patch group that are adjacent to each other in the circumferential direction of the first region 20A" means four combinations, which are a combination of the first patch group 22A and the second patch group 24A, a combination of the first patch group 22A and the second patch group 24B, a combination of the first patch group 22B and the second patch group 24A, and a combination of the first patch group 22B and the second patch group 24B. In Fig. 2, the imaging target surface 20S includes four blank regions 26 each of which is disposed between a first patch group and a second patch group that are adjacent to each other in the circumferential direction of the first region 20A (that is, the blank regions 26 are disposed for all of the above-described four combinations).

In addition, it is preferable that the imaging target surface 20S includes figures 27 disposed in the blank regions 26 each disposed between a first patch group and a second patch group. The figures 27 are for showing a range that is to be included in the angle of view in a case where a user images the calibration member 20 and the color forming member 30. Therefore, it is preferable that the imaging target surface 20S includes four figures 27, which are respectively disposed at the four blank regions 26 as shown in Fig. 2, so that the range to be included in the angle of view is easily figured out. In an example shown in Fig. 2, the shapes of the four figures 27 respectively disposed in the four blank regions 26 are similar to each other. By capturing the captured image 8 with the camera 11 at such an imaging position that the four figures 27 respectively disposed in the blank regions 26 are included in the angle of view, it is possible to image the first patch groups 22A and 22B, the second patch groups 24A and 24B, and the color forming member 30 placed in the first region 20A such that the first patch groups 22A and 22B, the second patch groups 24A and 24B, and the color forming member 30 are included in the angle of view.

The calibration member 20 of the present exemplary embodiment includes a support 200 and a transparent member 202, and the color forming member 30 is placed between the support 200 and the transparent member 202. Fig. 3 is a cross-sectional view of a portion of the calibration member 20 on which the color forming member 30 is placed.

As shown in Fig. 3, the support 200 according to the present exemplary embodiment is a laminate in which a first support 200A and a second support 200B are laminated onto each other. For example, in the support 200 according to the present exemplary embodiment, the frame 21 and the patches 25 described above are formed on the first support 200A. Note that each of the frame 21 and the patches 25 described above is provided on the first support 200A. Note that each of the frame 21 and the patches 25 described above may be provided on a surface 200AS2 of the first support 200A that is on the second support 200B side or may be provided on a surface 200AS1 that is opposite to the surface 200AS2. In addition, the frame 21 and the patches 25 may be provided on different surfaces such that, for example, the frame 21 is provided on the surface 200AS 1 with the patches 25 provided on the surface 200AS2 or the frame 21 is provided on the surface 200AS2 with the patches 25 provided on the surface 200AS1.

Meanwhile, the color forming member 30 is placed on the second support 200B. Specifically, regarding the second support 200B, a surface 200BS2 is in contact with the color forming member 30 and a surface 200BS1 is in contact with the surface 200AS2 of the first support 200. The second support 200B is, for example, a transparent member formed of a resin or the like.

In addition, the gloss of the surface 200AS2 of the first support 200A is relatively low but the gloss of the surface 200BS2 of the second support 200B is relatively high. As described above, in the present exemplary embodiment, the color forming member 30 is disposed on the surface 200BS2 of the second support 200B of the support 200. It is preferable that a surface on which the color forming member 30 is disposed is not contaminated, and it is preferable that the surface on which the color forming member 30 is disposed is whiter than the color forming member 30 forming a color. In the present exemplary embodiment, the unevenness of the surface 200BS2 of the second support 200B, on which the color forming member 30 is placed, is suppressed and the gloss of the surface 200BS2 is made relatively high and is made relatively smooth. Accordingly, dirt adhering to the surface 200BS of the second support 200B of the support 200 in the present exemplary embodiment is prevented and dirt on the surface 200BS is easily wiped off even in a case where the surface 200BS is contaminated. As described above, in the present exemplary embodiment, the state of a surface on which the color forming member 30 is placed can be kept favorable.

Meanwhile, the transparent member 202 is provided on the color forming member 30 in a state of covering the color forming member 30. For example, in the present exemplary embodiment, the size (the area) of the transparent member 202 is the same as that of the support 200. That is, the transparent member 202 according to the present exemplary embodiment covers the entire support 200 in a state where the color forming member 30 is placed on the support 200. For example, the color forming member 30 may be curled. Generally, the color forming member 30 having a size (an area) necessary for measurement is used after being cut off from a large color forming member roll. Therefore, the color forming member 30 may be curled after being cut off. In addition, simply placing the color forming member 30 on the support 200 may result in the color forming member 30 moving. In the present exemplary embodiment, since the color forming member 30 is covered by the transparent member 202, the color forming member 30 can be flattened even in a case where the color forming member 30 is curled and the color forming member 30 in a state of being placed can be restrained from moving. Note that in the present exemplary embodiment, the size (the area) of the transparent member 202 is the same as that of the support 200. However, the size of the transparent member 202 is not limited to that in the present exemplary embodiment. The transparent member 202 only needs to be larger than at least the color forming member 30 so that the transparent member 202 can cover the entire color forming member 30.

Note that in the present exemplary embodiment, a surface 202S of the transparent member 202 that is on a side opposite to the color forming member 30 side is the imaging target surface 20S. Therefore, in a case where the color forming member 30 is imaged with the gloss of the surface 202S of the transparent member 202 being relatively high, the color of an image (hereinafter, referred to as a "color forming member image") showing the color forming member 30 that is included in the captured image 8 obtained by imaging the color forming member 30 may be inappropriate since the amount of reflected light reflected by the surface 202S is large. For example, in the case of the above-described PRESCALE which is used for pressure measurement, although the PRESCALE forms a red color in accordance with pressure, the color forming member image included in the captured image 8 is made whitish in a case where the reflected light is large, which may influence measurement of the amount of energy. Therefore, in the present exemplary embodiment, the gloss of the surface 202S of the transparent member 202, specifically, the gloss of the surface 202S of at least a portion of the transparent member 202 that covers the color forming member 30 is set to be low (that is, the surface 202S has a low gloss) so that reflected light generated in the case of imaging is suppressed. In addition, the gloss of the surface 202S of a portion of the transparent member 202 that covers the color forming member 30 is lower than the gloss of the above-described surface 200BS2 of the second support 200B. Note that from a viewpoint of suppressing reflected light in order to make the tint of the color forming member image included in the captured image 8 appropriate, it is preferable that the gloss of the surface 202S of the transparent member 202 is 40 or less in terms of 60-degree gloss.

In the energy measurement system 1 of the present exemplary embodiment, in a case where the color forming member 30 is to be imaged as described above, the color forming member 30 is placed on the first region 20A of the support 200 of the calibration member 20 and the color forming member 30 is imaged by means of the camera 11 in a state where an upper portion of the color forming member 30 is covered with the transparent member 202. Accordingly, the captured image 8 including the color forming member image is obtained.

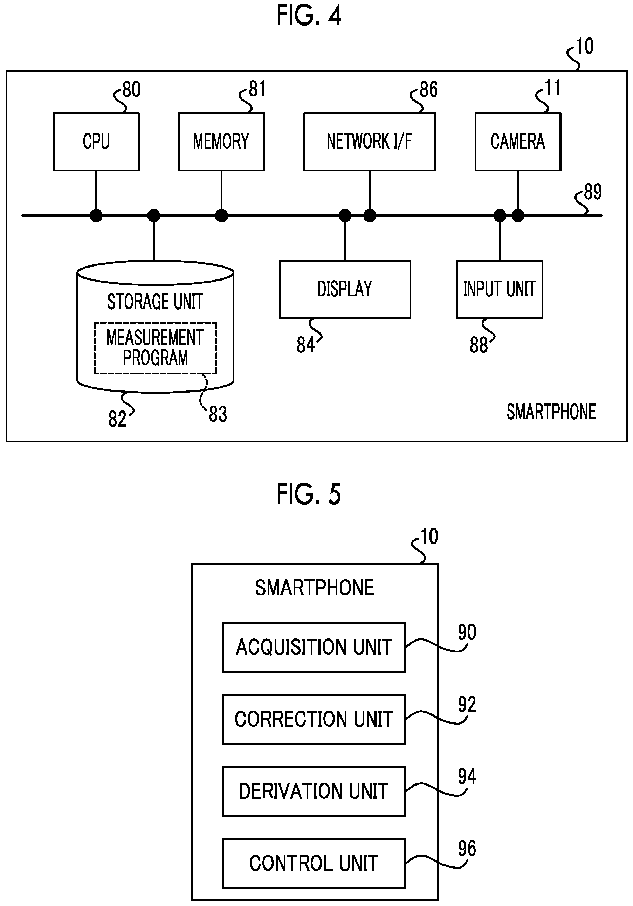

Next, the smartphone 10 of the present exemplary embodiment will be described in detail. First, an example of a hardware configuration of the smartphone 10 will be described with reference to Fig. 4. As shown in Fig. 4, the smartphone 10 includes a central processing unit (CPU) 80, a non-volatile storage unit 82, and a memory 81 which is a temporary storage area. In addition, the smartphone 10 includes a display 84, such as a liquid crystal display, an input unit 88, a network interface (I/F) 86, and the camera 11. The CPU 80, the storage unit 82, the memory 81, the display 84, the input unit 88, the network I/F 86, and the camera 11 are connected to each other via a bus 89 such as a system bus and a control bus so that various types of information can be exchanged therebetween.

The storage unit 82 is realized by, for example, a storage medium, such as a hard disk drive (HDD), a solid state drive (SSD), and a flash memory. A measurement program 83 is stored in the storage unit 82. The CPU 80 reads out the measurement program 83 from the storage unit 82, loads the measurement program 83 into the memory 81, and executes the loaded measurement program 83. The CPU 80 is an example of a processor according to the embodiment of the present disclosure and the measurement program 83 is an example of an energy measurement program according to the embodiment of the present disclosure.

The input unit 88 is for reception of an operation performed by a user, and is, for example, a touch panel, a button, a keyboard, a mouse, or the like. Note that for the camera 11 of the present exemplary embodiment, for example, a touch panel display in which the display 84 and the input unit 88 are integrated with each other is adopted. The network I/F 86 performs wired or wireless communication with the server 4 and other external devices (not shown). The camera 11 includes a sensor having a plurality of different spectral sensitivities, images a subject by means of the sensor under the control of the CPU 80, and outputs an image signal of the captured image 8.

Next, an example of a functional configuration of the smartphone 10 will be described with reference to Fig. 5. As shown in Fig. 5, the smartphone 10 includes an acquisition unit 90, a correction unit 92, a derivation unit 94, and a control unit 96. With the CPU 80 executing the measurement program 83, the CPU 80 functions as each of functional units which are the acquisition unit 90, the correction unit 92, the derivation unit 94, and the control unit 96.

The acquisition unit 90 acquires the captured image 8 including an image (hereinafter, referred to as a "calibration member image") showing the calibration member 20 and the color forming member image of the color forming member 30, which are captured by the camera 11.

The correction unit 92 extracts an image (hereinafter, referred to as a "frame image") showing the frame 21 from the captured image 8 and corrects at least one of the distortion, the inclination, or the size of the captured image 8 based on the shape of the extracted frame image. As a method of extracting the frame image, a known method in which edge extraction processing or the like in an image is used can be applied as appropriate. Specifically, in a case where the frame 21 is rectangular, the correction unit 92 performs projective transformation, affine transformation, and the like such that the frame image is also made rectangular and an angle of 90 degrees is formed at each of four corners of the frame image extracted from the captured image 8 and corrects the distortion, the inclination, and the size of the captured image 8.

In addition, the correction unit 92 performs calibration with respect to the captured image 8 acquired by the acquisition unit 90 by using images (hereinafter, referred to as "patch images") showing the patches 25 included in the captured image 8. Specifically, the correction unit 92 performs calibration of the color of the color forming member image (for example, at least one of the hue or the color density thereof) included in the captured image 8 based on the colors of the patch images of the patches 25 included in each of the first patch groups 22A and 22B and the second patch groups 24A and 24 that are included in the captured image 8. As a method for the calibration, a known method can be applied as appropriate. For example, a reference color is stored in the storage unit 82 in advance for each of the patches 25 that the calibration member 20 includes and the correction unit 92 adjusts the color of the captured image 8 such that each of the colors of a plurality of patch images included in the captured image 8 coincides with the reference color.

In addition, as described above, each of the first patch groups 22A and 22B and the second patch groups 24A and 24B may include the patches 25 having the same color as each other. In this case, the patches 25, which are formed to originally have the same color as each other, may be expressed in different colors in the captured image 8 due to the influence of an imaging environment such as an illumination environment in which the imaging is performed, the characteristics of the camera 11, an imaging angle, and an imaging distance. Therefore, for example, the correction unit 92 may adjust the color of the captured image 8 such that the average color of the patch images corresponding to the patches 25 formed to have the same color as each other coincides with a reference color. In addition, for example, the correction unit 92 may adjust the color of the captured image 8 such that the color of a patch image, of which the color is closest to a reference color among the patches 25 formed to have the same color as each other, coincides with the reference color.

Note that the correction unit 92 may perform the calibration by using a part of the patch images of the plurality of patches 25 included in each of the first patch groups 22A and 22B and the second patch groups 24A and 24B.

In addition, for example, the patch 25 used for calibration performed by the correction unit 92 may differ depending on the type of the color forming member 30. For example, regarding PRESCALE which is an example of the color forming member 30, a plurality of kinds of PRESCALE for a low pressure, a medium pressure, a high pressure, and the like of which the measurable pressure ranges are different from each other are manufactured. In addition, for example, as the color forming member 30, THERMOSCALE, UVSCALE, and the like also can be used instead of PRESCALE.

Therefore, the correction unit 92 may perform the calibration by using a part of the patch images of the plurality of patches 25 included in the first patch groups 22A and 22B and the second patch groups 24A and 24B, the part of the patch images being determined in advance in accordance with the type of the color forming member 30 corresponding to the color forming member image. A correspondence relationship between the type of the color forming member 30 and the patches 25 used for calibration may be stored in, for example, the storage unit 82 in advance. The type of the imaged color forming member 30 may be input by, for example, the user via the input unit 88 or an identification code indicating the type of the color forming member 30 may be attached to the color forming member 30 so that the type of the color forming member 30 is specified in a case where the identification code is read by the correction unit 92 from the captured image 8.

Since the correction unit 92 performs correction of the distortion, the inclination, the size, and the color of the captured image 8 in such a manner, the influence of an imaging environment such as an illumination environment in which the imaging is performed, the characteristics of the camera 11, an imaging angle, and an imaging distance that may be caused in a case where a user performs imaging can be corrected.

Note that in the present exemplary embodiment, the calibration member 20 and the color forming member 30 are imaged by means of an imaging supporting device 40 as described above. With the imaging supporting device 40, the calibration member 20 and the color forming member 30 are imaged with the calibration member 20, the color forming member 30, and the camera 11 of the smartphone 10 being set in a predetermined positional relationship external light being blocked, and light emitted from a predetermined illumination device 74 being used as imaging light. Therefore, in the present exemplary embodiment, the calibration member 20 and the color forming member 30 can be imaged with less influence of the imaging environment. Accordingly, in the present exemplary embodiment, the captured image 8 captured by the camera 11 is an image with less influenced by the imaging environment. Therefore, according to the present exemplary embodiment, processing of correcting the above-described color forming member image or the like can be reduced in number or omitted as appropriate and thus a processing load or the like for correction processing can be reduced.

The derivation unit 94 derives the amount of energy applied to the color forming member 30 based on the color of the color forming member image after the calibration performed by the correction unit 92. Specifically, data in which a relationship between the amount of energy applied to the color forming member 30 and the color of the color forming member 30 is determined in advance may be stored in the storage unit 82 in advance, and the derivation unit 94 may convert the color of the color forming member image included in the captured image 8 into the amount of energy by using the data. In addition, the data in which the relationship between the amount of energy applied to the color forming member 30 and the color of the color forming member 30 is determined in advance may be prepared and stored in the storage unit 82 for each type of color forming member 30.

In addition, the derivation unit 94 may derive various indicators related to the amount of energy applied to the color forming member 30. Examples of the various indicators include energy distribution, which is obtained by deriving the amount of energy for each pixel of a color formation image corresponding to a region (hereinafter, referred to as a "color formation region") of the color forming member 30 in which a color has been formed, and representative values such as the maximum value, the minimum value, the average value, and the median of the amounts of energy in the color formation region. In addition, examples of the various indicators include the area of the color formation region, the proportion of the area of a portion of the color formation region in which the amount of energy falls within a predetermined range, the uniformity in amount of energy in the color formation region, a load (the product of the area of the color formation region and the average value of the amount of energy) at the color formation region, and the like. In addition, in a case where a reference for the degree of color formation (that is, the amount of energy and energy distribution) of the color forming member 30 is determined in advance, examples of the various indicators include the rate of match or the rate of deviation with respect to the reference.

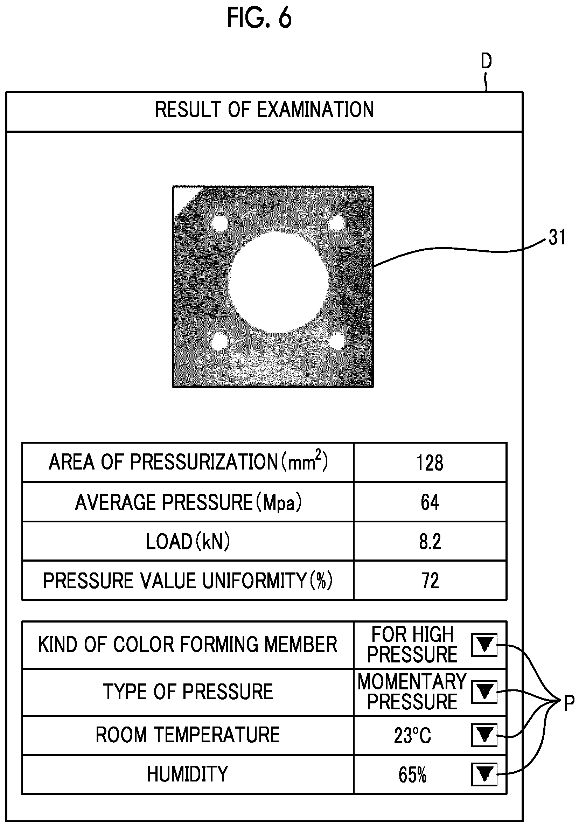

The control unit 96 performs control such that the captured image 8 that has been corrected for the distortion, the inclination, the size, and the color by the correction unit 92 and the various indicators that are derived by the derivation unit 94 and that are related to the amount of energy are displayed on the display 84. Fig. 6 shows an example of a screen D displayed on the display 84 by the control unit 96. On the screen D, a color forming member image 31 in the captured image 8 and various indicators that are derived from the color forming member image 31 and that are related to the amount of energy are displayed.

As shown on the screen D, the control unit 96 may perform control such that the color forming member image 31 is extracted from the captured image 8 and is displayed on the display 84. Note that the "area of pressurization" on the screen D shown in Fig. 6 means the area of the above-described color formation region. The "average pressure" means the average value of the amounts of energy in the above-described color formation region. The "load" means the product of the area of pressurization and the average pressure. The "pressure value uniformity" means the pressure value uniformity in the color formation region.

In addition, accessory information related to the captured image 8 may be input to the control unit 96. On the screen D, as an example of the accessory information related to the captured image 8, the kind of the color forming member 30, the type of pressure, the room temperature, and the humidity are displayed and pull-down menus P for the inputting of the kind of the color forming member 30, the type of pressure, the room temperature, and the humidity are displayed. Note that examples of the "type of pressure" include momentary pressure indicating the magnitude of pressure momentarily applied to the PRESCALE and continuous pressure indicating the time-integral of the magnitude of pressure continuously applied to the PRESCALE. In addition, examples of the accessory information include identification information of the calibration member 20, the color forming member 30, a user who has applied energy to the color forming member 30, and a user who has imaged the color forming member 30, the result of an evaluation that is performed by a user for the amount of energy, and various examination conditions.

In addition, the control unit 96 transmits, to the server 4 via the network I/F 86, at least one of the captured image 8 before correction performed by the correction unit 92, the captured image 8 after correction, the color forming member image 31, or the color forming member image 31 after correction. In addition, the control unit 96 transmits, to the server 4, the various indicators that are derived by the derivation unit 94 and that are related to the amount of energy and the accessory information input thereto. The server 4 stores information received from the smartphone 10 (the control unit 96) in the database 6 in association with the captured image 8.

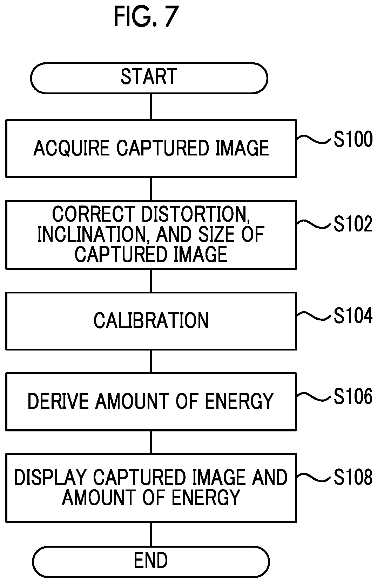

Next, the action of the smartphone 10 according to the present exemplary embodiment will be described with reference to Fig. 7. In the smartphone 10, the CPU 80 executes the measurement program 83 so that measurement processing shown in Fig. 7 is executed. The measurement processing is executed, for example, in a case where a user gives an instruction to start execution via the input unit 88.

In step S100, the acquisition unit 90 acquires the captured image 8 that is captured by the camera 11 and that includes a calibration member image of the calibration member 20 and the color forming member image 31 of the color forming member 30. Next, in step S102, the correction unit 92 extracts a frame image of the frame 21 from the captured image 8 acquired in step S100 described above and corrects at least one of the distortion, the inclination, or the size of the captured image 8 based on the shape of the extracted frame image. Next, in step S104, the correction unit 92 performs calibration for the color of the captured image 8 (particularly, the color forming member image 31 included in the captured image 8) by using patch images included in the captured image 8 corrected in step S102 described above.

Next, in step S106, the derivation unit 94 derives the amount of energy applied to the color forming member 30 based on the color of the color forming member image 31 subjected to the calibration in step S104 described above. Next, in step S108, the control unit 96 performs control such that the color forming member image 31 subjected to the calibration in step S104 described above and the amount of energy derived in step S106 described above are displayed on the display 84. Because of the control, the screen D as shown in Fig. 6 is displayed on the display 84. In a case where processing in step S108 ends, information processing shown in Fig. 7 ends.

As described above, the calibration member 20 of the above-described embodiment is a calibration member used for calibration of a color forming member image in the captured image 8 that is obtained by imaging the color forming member 30 with the camera 11, the color forming member 30 forming a color with density distribution corresponding to the amount of energy applied thereto. The calibration member 20 includes the support 200 including the first region 20A on which the color forming member 30 is placed and the second region 20B on which the patches 25 for calibration of a color forming member image are disposed and the transparent member 202 that covers the color forming member 30 placed on the first region 20A of the support 200 and of which the surface 202S, which is the imaging target surface 20S, has a low gloss.

Accordingly, with the calibration member 20 of the above-described embodiment, it is possible to appropriately adjust the tint of a color forming member image included in the captured image 8 obtained by imaging the color forming member 30.

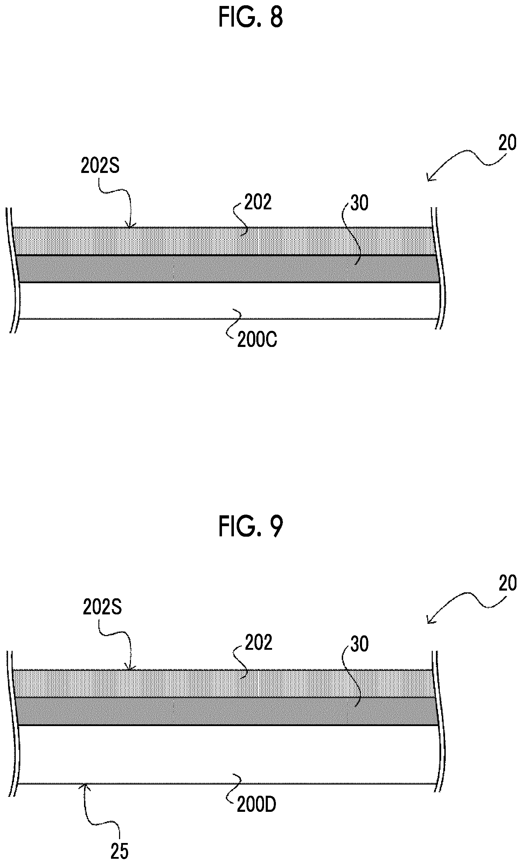

Note that the configuration of the support 200 is not limited to the above-described configuration. For example, the first support 200A and the second support 200B may be integrated with each other. In this case, for example, a support 200C which is synthetic paper can be applied as shown in Fig. 8. As such synthetic paper, so-called YUPO paper can be used. In addition, for example, a resin layer 200D may be applied as the support 200 as shown in Fig. 9 and in this case, the patches 25 are disposed on a resin layer 200B through printing or the like.

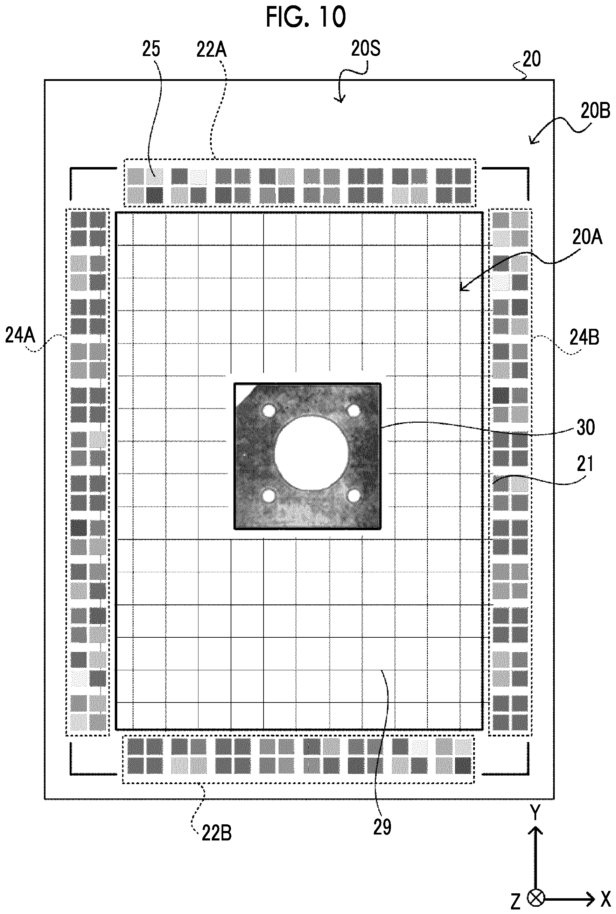

In addition, as shown in Fig. 10, the calibration member 20 may be provided with grid lines 29 that function as a guide for disposition of the color forming member 30. Each of grid line 29 has a color and a width that do not influence derivation of the amount of energy applied to the color forming member 30 that is performed based on the color of the color forming member image 31 included in the captured image 8. For example, the above-described PRESCALE used for pressure measurement forms a red color corresponding to pressure and in this case, the colors of the grid lines are preferably blue. Note that although the grid lines 29 of the calibration member 20 shown in Fig. 10 are provided in the first region 20A, the grid lines 29 may also be provided in the second region 290B.

In addition, although an embodiment in which the camera 11 provided in the smartphone 10 is applied as an example of the imaging device according to the embodiment of the present disclosure has been described above, the imaging device is not limited to the camera 11 provided in the smartphone 10. For example, as the imaging device, a digital camera or the like that is provided separately from the smartphone 10 may be also applied. In addition, although an embodiment in which the smartphone 10 is applied as an example of the energy measurement apparatus according to the embodiment of the present disclosure has been described above, the energy measurement apparatus is not limited to the smartphone 10. For example, as the energy measurement apparatus, a tablet terminal, a wearable terminal, a personal computer, or the like may also be applied. In addition, although an embodiment in which the imaging device and the energy measurement apparatus according to the embodiment of the present disclosure are integrated with each other in the form of the smartphone 10 has been described above, the imaging device and the energy measurement apparatus may be separated from each other.

In addition, in the above-described embodiment, for example, various processors as follows can be used as the hardware structure of a processing unit that execute various kinds of processing, such as the acquisition unit 90, the correction unit 92, the derivation unit 94, and the control unit 96. As described above, the various processors include a programmable logic device (PLD) as a processor of which the circuit configuration can be changed after manufacture, such as a field programmable gate array (FPGA), a dedicated electrical circuit as a processor having a dedicated circuit configuration for executing specific processing such as an application specific integrated circuit (ASIC), and the like, in addition to the CPU as a general-purpose processor that functions as various processing units by executing software (program).

One processing unit may be composed of one of the various processors or may be composed of a combination of two or more processors of the same type or different types (for example, a combination of a plurality of FPGAs or a combination of a CPU and an FPGA). In addition, a plurality of processing units may be composed of one processor.

As an example of the plurality of processing units composed of one processor, first, the present disclosure includes an aspect in which one processor is composed of a combination of one or more CPUs and software, and the processor functions as the plurality of processing units, as represented by a computer such as a client and a server. Second, the present disclosure includes an aspect of using a processor that implements functions of the entire system including the plurality of processing units in one integrated circuit (IC) chip, as represented by a system on chip (SoC). As described above, various processing units are configured by using one or more of the above-described various processors as the hardware structure.

Furthermore, more specifically, an electric circuit (circuitry) in which circuit elements such as semiconductor elements are combined can be used as the hardware structure of the various processors.

In addition, in each exemplary embodiment described above, an aspect in which the measurement program 83 is stored (installed) in the storage unit 82 in advance has been described. However, the present disclosure is not limited thereto. The measurement program 83 may be provided in a state of being recorded on a recording medium, such as a compact disc read only memory (CD-ROM), a digital versatile disc read only memory (DVD-ROM), or a universal serial bus (USB) memory. In addition, each measurement program 83 may be downloaded from an external device via a network. That is, the program (a program product) described in the present exemplary embodiment may be distributed from an external computer instead of being provided by means of a recording medium.

The disclosure of JP2022-091062 filed on June 3, 2022 in Japan is incorporated in the present specification by reference in its entirety.

All documents, patent applications, and technical standards described in the present specification are incorporated in the present specification by reference to the same extent as in a case where the individual documents, patent applications, and technical standards are specifically and individually stated to be incorporated by reference.

### Explanation of References

1: energy measurement system
4: server
6: database
8: captured image
10: smartphone
11: camera
20: calibration member
20A: first region
20B: second region
20S: imaging target surface
21: frame
22A, 22B: first patch group
24A, 24B: second patch group
25: patch
26: blank region
27: figure
30: color forming member
31: color forming member image
80: CPU
81: memory
82: storage unit
83: measurement program
84: display
86: network I/F
88: input unit
89: bus
90: acquisition unit
92: correction unit
94: derivation unit
96: control unit
200, 200C: support
200A: first support
200AS1, 200AS2: surface
200B: second support
200BS1, 200BS2: surface
200D: resin layer
202: transparent member
202S: surface
D: screen
P: pull-down menu

## Claims

1. A calibration member for calibration of an image of a color forming member, which forms a color with density distribution corresponding to an amount of energy applied thereto, in a captured image obtained by imaging the color forming member by an imaging device, the calibration member comprising:
a support that includes a first region on which the color forming member is placed and a second region on which a calibration image for calibration of the image of the color forming member is disposed; and
a transparent member that covers the color forming member placed on the first region of the support and of which a surface that serves as an imaging target surface in a case where the color forming member is to be imaged has a low gloss.

2. The calibration member according to claim 1, wherein a gloss of the surface of the transparent member that serves as the imaging target surface is 40 or less in terms of 60-degree gloss.

3. The calibration member according to claim 1, wherein a gloss of the surface of the transparent member that serves as the imaging target surface is lower than a gloss of a surface of the support on which the color forming member is placed.

4. The calibration member according to claim 1, wherein:
the support is a laminate in which a first support layer including the second region and a second support layer including the first region are laminated on each other, and
a gloss of a surface of the second support layer on which the color forming member is placed is higher than a gloss of a surface of the first support layer that is in contact with the second support layer.

5. The calibration member according to claim 1, wherein the support is composed of synthetic paper.

6. The calibration member according to claim 1, wherein the support is a resin layer on which the calibration image is disposed.

7. The calibration member according to claim 1, wherein the calibration image is disposed on a surface of the support that is on a side opposite to a side on which the color forming member is placed.

8. The calibration member according to claim 1, wherein:
the color forming member forms a red color, and
blue grid lines are formed on the first region of the support.

9. An energy measurement apparatus comprising at least one processor, wherein the processor is configured to:
acquire a color forming member image showing a color forming member imaged by an imaging device;
perform calibration with respect to the color forming member image by using the calibration image disposed on the calibration member according to any one of claims 1 to 8; and
derive an amount of energy applied to the color forming member based on a color of the color forming member image after the calibration by using data in which a relationship between the amount of energy applied to the color forming member and the color of the color forming member image is determined in advance.

10. An energy measuring method of causing a computer to execute processing of:
acquiring a color forming member image showing a color forming member imaged by an imaging device;
performing calibration with respect to the color forming member image by using the calibration image disposed on the calibration member according to any one of claims 1 to 8; and
deriving an amount of energy applied to the color forming member based on a color of the color forming member image after the calibration by using data in which a relationship between the amount of energy applied to the color forming member and the color of the color forming member image is determined in advance.

11. An energy measurement program causing a computer to execute processing of:
acquiring a color forming member image showing a color forming member imaged by an imaging device;
performing calibration with respect to the color forming member image by using the calibration image disposed on the calibration member according to any one of claims 1 to 8; and
deriving an amount of energy applied to the color forming member based on a color of the color forming member image after the calibration by using data in which a relationship between the amount of energy applied to the color forming member and the color of the color forming member image is determined in advance.
